(19) <span>Europäisches Patentamt<br>European Patent Office<br>Office européen des brevets</span>

(11) **EP 2 811 488 A1**

(12) # EUROPEAN PATENT APPLICATION
published in accordance with Art. 153(4) EPC

(43) Date of publication:
**10.12.2014 Bulletin 2014/50**

(21) Application number: **13743323.1**

(22) Date of filing: **01.02.2013**

(51) Int Cl.:
**H01B 3/22** *(2006.01)*        **H01G 4/22** *(2006.01)*

(86) International application number:
**PCT/JP2013/052364**

(87) International publication number:
**WO 2013/115372 (08.08.2013 Gazette 2013/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.02.2012 JP 2012021882**

(71) Applicant: **JX Nippon Oil & Energy Corporation**
**Chiyoda-ku**
**Tokyo 100-8162 (JP)**

(72) Inventors:
• **KIMURA, Nobuhiro**
  **Tokyo 100-8162 (JP)**
• **HOSHINO, Hiroyuki**
  **Tokyo 100-8162 (JP)**
• **KAWAGUCHI, Takahiro**
  **Tokyo 100-8162 (JP)**

(74) Representative: **EIP**
**Fairfax House**
**15 Fulwood Place**
**London WC1V 6HU (GB)**

(54) **ELECTRICALLY INSULATING OIL COMPOSITION HAVING EXCELLENT PERFORMANCE IN WIDE TEMPERATURE RANGE**

(57)    The present invention provides an electrical insulating oil composition that can maintain breakdown voltage at a high level in a wide temperature range of -50°C to 30°C, extremely unlikely precipitates as crystals in particular at -50°C, and has excellent properties both at ordinary temperature and low temperature. The insulating oil composition comprises diarylalkanes having 14 carbon atoms (C14) and having 15 carbon atoms (C15), wherein the C14 diarylalkane is 1,1-diphenylethane or a mixture of 1,1-diphenylethane and benzyltoluene and the C15 diarylalkane is 1-phenyl-1-methylphenylethane.

EP 2 811 488 A1

## Description

## Technical Field

The present invention relates to electrical insulating oil compositions comprising a diarylalkane mixture and having excellent properties in a wide temperature range.

## Background Art

Examples of properties that an electrical insulating oil is mainly required to have include high breakdown voltage, high hydrogen gas absorbability, low viscosity and low melting point. In recent years, electrical insulating oils with a high breakdown voltage are being used worldwide. Unlike the past years, an electrical insulating oil having such excellent low temperature properties that make it possible to be used in extremely low temperature districts where such an oil has never been used before has been demanded, accompanied with economic growth and has been required to have such properties that do not cause the production of solid at -50°C. It is known that if solids are produced in an electrical insulating oil during the use thereof, discharge is likely to occur from the solidified portions. Therefore, an electrical insulating oil from which some components are likely to precipitate as solids under this environment cannot be used. Whilst, as the temperature at which an electrical insulating oil may be used depends on the temperature of the environment of usage thereof, the oil needs to have not only properties at extremely-low temperatures but also properties in the vicinity of 20 to 30°C.

Over a long period of time, a mixture of benzyltoluene and dibenzyltoluene has been used as an electrical insulating oil with a high breakdown voltage. Although benzyltoluene is high in aromatic carbon ratio per molecule, high in hydrogen gas absorbability and excellent in withstand voltage characteristics, according to some literatures, the melting points of 3 types of positional isomer of benzyltoluene, i.e., o-isomer, m-isomer and p-isomer are +6.6°C, -27.8°C and +4.6°C, respectively, and thus cannot be deemed low.

In order to solve such problems, Japanese Patent Application Laid-Open Publication No. 60-87231 (Patent Literature 1) has proposed to mix benzyltoluene produced by reacting toluene and benzyl chloride with a ferric chloride catalyst, with dibenzyltoluene that is a coproduct. ARKEMA has commercialized an electrical insulating oil composition under the name of "JARYLEC C-101" which is the same in technical sense as the proposal of Patent Literature 1. Patent Literature 1 discloses an oligomer mixture of triarylmethane, which is, however, substantially a mixture of benzyltoluene and dibenzyltoluene. Patent Literature 1 describes at page 3 "monobenzyltoluene has a defect that it crystallizes at -20°C after supercooling" and therefore, the composition is produced by mixing dibenzyltoluene to restrain the crystallization.

However, addition of compounds such as dibenzyltoluene is not a good measure for the following three reasons. That is, even though the freezing point depression could be expected by addition of dibenzyltoluene, it is not decreased as much as the mass of the addition of dibenzyltoluene due to the high molecular weight thereof. The freezing point depression occurrs proportionally to the mol concentration of the material to be added, but with the amount of dibenzyltoluene in the order of 20 percent by mass as added in the above-described product JARYLEC C-101, the crystallization temperature can be decreased only by 6 to 8°C when calculated from the mol concentration.

Secondly, dibenzyltoluene merely increases the viscosity of an insulating oil and thus decreases the mobility of the solution molecules thereby apparently restrains the oil from precipitating. Therefore, the precipitation of the oil as crystals can be found if carefully cooling the oil.

The third reason is that dibenzyltoluene has high biological accumulation properties. In recent years, Stockholm Convention or the like has started to impose an international restriction on substances having a high toxicity. Although no such a restriction has been imposed on dibenzyltoluene itself, it has been designated as Type I Monitoring Chemical Substance in Japan due to its high biological accumulation properties. The use of this substance is allowed in the form of essential use where the purposes of use are restricted, but from now, tightening of regulations on the high toxicity substances is inevitable, and thus alternative materials with a low toxicity have been demanded.

Japanese Patent Application Laid-Open Publication No. 61-241907 (Patent Literature 2) describes an electrical insulating oil comprising 1-phenyl-1-methylphenylethane, but the oil has a corona inception voltage at -40°C of 81 V/μ and thus is not sufficiently satisfactory with regard to properties.

Japanese Patent Application Laid-Open Publication No. 63-64217 (Patent Literature 3) describes an electrical insulating oil comprising benzyltoluene and ditolylmethane, and from the description, it is appreciated that the properties of the oil is significantly varied on the type of substances to be blended and the blend ratio thereof. That is, an electrical insulating oil infrequently brings out properties as unexpected by theory depending on substances to be blended.

On the other hand, 1-phenyl-1-xylylethane or 1-phenyl-1-ethylphenylethane is easily produced and has excellent properties such as relatively high breakdown voltage and small dielectric loss and thus have been widely used. For example, a composition comprising 1-phenyl-1-(2,4-dimethylphenyl)ethane or 1-phenyl-1-(2,5-dimethylphenyl)ethane has been proposed as an electrical insulating oil composition which is excellent in breakdown voltage and dielectric loss and also particularly excellent in oxidation stability (Japanese Patent Application Laid-Open Publication No. 57-50708: Patent Literature 4).

However, an electrical insulating oil composition comprising 1-phenyl-1-xylylethane or 1-phenyl-1-ethylphenylethane has a pour point of -47.5°C or lower and a very low melting point but has a problem that it is not sufficient in insulation properties for a capacitor in particular in a low temperature range of 0°C or lower because its 40°C viscosity is in the order of 5.0 mm$^2$/s, which is high.

Meanwhile, 1,1-diphenylethane is high in breakdown voltage and hydrogen gas absorbability and has a 40°C viscosity of 2.8 mm$^2$/s and a freezing point of -18°C, which is low and thus is a potential substance for an electrical insulating oil with an excellent low temperature properties. Although 1,1-diphenylethane is low in freezing point, it cannot be used alone in a temperature range of -50°C or lower.

Although benzyltoluene is high in hydrogen gas absorbability and low in viscosity, it is not satisfactory for use at -50°C because the melting points of the o-isomer, m-isomer and p-isomer are +6.6°C, -27.8°C and +4.6°C, respectively, as described above.

**Citation List**

**Patent Literature**

Patent Literature 1: Japanese Patent Application Laid-Open Publication No. 60-87231
Patent Literature 2: Japanese Patent Application Laid-Open Publication No. 61-241907
Patent Literature 3: Japanese Patent Application Laid-Open Publication No. 63-64217
Patent Literature 4: Japanese Patent Application Laid-Open Publication No. 57-50708

**Summary of Invention**

**Technical Problem**

The present invention has an object to provide an electrical insulating oil composition that can maintain breakdown voltage at a high level in a wide temperature range of -50°C to 30°C, extremely unlikely precipitates as crystals in particular at -50°C, and has excellent properties both at ordinary temperature and low temperature.

**Solution to Problem**

As the result of extensive studies and researches carried out to achieve the above-described object, the present invention has been completed on the basis of the finding that an electrical insulating oil which is excellent in a wide temperature range of -50 to 30°C was able to be produced by varying the total amount and component ratio of 1,1-diphenylethane and 1-phenyl-1-methylphenylethane in the whole insulating oil and the ratio of isomers in the 1-phenyl-1-methylphenylethane.

That is, the present invention is an electrical insulating oil composition comprising diarylalkanes having 14 carbon atoms (C14) and having 15 carbon atoms (C15), wherein the C14 diarylalkane is 1,1-diphenylethane or a mixture of 1,1-diphenylethane and benzyltoluene and the C15 diarylalkane is 1-phenyl-1-methylphenylethane.

The present invention is the electrical insulating oil composition according to the foregoing wherein the 1,1-diphenylethane/1-phenyl-1-methylphenylethane (mass ratio) is from 0.5 to 8.0.

The present invention is the electrical insulating oil composition according to the foregoing, wherein the total content of 1-phenyl-1-(3-methylphenyl)ethane and 1-phenyl-1-(2-methylphenyl)ethane of the 1-phenyl-1-methylphenylethane is 25 percent by mass or less on the basis of the electrical insulating oil composition.

The present invention is an electrical insulating oil composition produced by contacting an activated earth with the electrical insulating oil composition according to the foregoing and adding thereto 0.01 to 1.0 percent by mass of an epoxy compound.

**Advantageous Effect of Invention**

The electrical insulating oil composition of the present invention is an electrical insulating oil composition that extremely unlikely precipitates as crystals and has properties that enables an oil-impregnated capacitor impregnated with the composition to be practically used at a low temperature of -50°C, and excellent properties in a wide temperature range to exhibit a high breakdown voltage even at 30°C. The electrical insulating oil composition of the present invention comprises components, each of which does not adversely affect living bodies. Therefore, the composition of the present invention is a practically excellent electrical insulating oil composition for use in impregnating capacitors.

**Description of Embodiments**

The present invention will be further described.

The electrical insulating oil composition of the present invention comprises diarylalkanes having 14 carbon atoms (C14) and having 15 carbon atoms (C15), wherein the C14 diarylalkane is 1, 1-diphenylethane or a mixture of 1,1-diphenylethane and benzyltoluene and the C15 diarylalkane is 1-phenyl-1-methylphenylethane.

The melting points of 1-phenyl-1-methylphenylethane are +39.5°C for o-isomer, -40°C or lower for m-isomer and -12°C for p-isomer. When 1-phenyl-1-methylphenylethane is produced from styrene and toluene using a zeolite catalyst for example as described in Example 1 of Japanese Patent Application Laid-Open Publication 2003-119159, the production rate of the o-isomer would be around 1 percent. Therefore, the isomer mixture is assumed to have a low melting point. Furthermore, the mixture is high in hydrogen gas absorbability and breakdown voltage and thus is an electrical insulating oil with excellent low temperature properties.

Examples of the C14 diarylalkane include 1,1-diphenylethane, 1,2-diphenylethane and benzyltoluene. However, 1,2-diphenylethane is not preferable because it has a higher melting point which is 51.2°C and thus is likely to solidify at low temperatures.

In the present invention, the C14 diarylalkane may be 1,1-diphenylethane alone or alternatively a mixture of 1,1-diphenylethane and benzyltoluene. The mix ratio of 1,1-diphenylethane and benzyltoluene is a mass ratio of 1,1-diphenylethane:benzyltoluene of preferably 60 to 100:40 to 0, more preferably 70 to 95:30 to 5. The use of a mixture of 1,1-diphenylethane and benzyltoluene is more preferable than the sole use of 1,1-diphenylethane because the breakdown voltage is higher.

The C13 diarylalkane may be exemplified by diphenylmethane which is, however, not preferable because it has a higher melting point that is 25°C and thus likely to solidify at low temperatures. Phenylxylyl ethane is known as a C16 diarylalkane, but is not preferable because the resulting oil composition would be lowered in the ratio of the aromatic carbon atoms of the total carbon atoms and thus reduced in the withstand voltage that is important for an insulating oil.

No particular limitation is imposed on the 1,1-diphenylethane/1-phenyl-1-methylphenylethane (mass ratio), which is, however, preferably from 0.5 to 8.0, more preferably from 0.5 to 5.0, more preferably from 0.5 to 3.5, most preferably from 1.0 to 3.0. If the 1,1-diphenylethane/1-phenyl-1-methylphenylethane is less than 0.5, the resulting composition would likely precipitate as crystals at low temperatures. If the 1,1-diphenylethane/1-phenyl-1-methylphenylethane exceeds 8.0, the resulting composition would likely precipitate as crystals.

No particular limitation is imposed on the ratio of isomsers in 1-phenyl-1-methylphenylethane. However, the total content of 1-phenyl-1-(3-methylphenyl)ethane and 1-phenyl-1-(2-methylphenyl)ethane is preferably 25 percent by mass or less on the basis of the electrical insulating oil composition. If the total content of 1-phenyl-1-(3-methylphenyl)ethane and 1-phenyl-1-(2-methylphenyl)ethane exceeds 25 percent by mass, the kinematic viscosity of the insulating oil itself would be higher, causing the properties thereof to be degraded.

The higher the viscosity of the electrical insulating oil, the more unlikely the oil circulates in a capacitor (convection) and thus the more unlikely the heat generated by discharge is removed. While the lower viscosity is preferred, among the diarylalkanes that are high in breakdown voltage, diphenylmethane that is smallest in molecular weight has a 40°C kinematic viscosity of 2.1 mm$^2$/s. While a mixture of 1-phenyl-1-xylylethane and 1-phenyl-1-phenylethylethane has a 40°C kinematic viscosity of about 5.0 mm$^2$/s, it has a kinematic viscosity of higher than 2000 mm$^2$/s at -50°C, which is associated with difficulty in measuring the breakdown voltage. That is, a mixture of 1-phenyl-1-xylylethane and 1-phenyl-1-phenylethylethane does not precipitate as crystalline at -50°C but cannot be used under these temperature conditions. Therefore, the 40°C kinematic viscosity is preferably lower than 5.0 mm$^2$/s which is the 40°C kinematic viscosity of the mixture of 1-phenyl-1-xylylethane and 1-phenyl-1-phenylethylethane, more preferably 4.5 mm$^2$/s or lower.

When a mixture of 1,1-diphenylethane and benzyltoluene is used as the C14 diarylalkane, the blend ratio of benzyltoluene is preferably 20 percent by mass or less, more preferably 15 percent by mass or less on the basis of the electrical insulating oil composition. Among 1,1-diphenylethane, 1-phenyl-1-methylphenylethane and benzyltoluene, benzyltoluene is not preferable because it has the highest melting point and if contained in an amount of more than 20 percent by mass, the resulting composition would relatively likely precipitate as crystals.

The electrical insulating oil composition of the present invention extremely unlikely precipitates as crystals and has excellent properties that enables an oil-impregnated capacitor impregnated with the composition to be practically used at a low temperature of -50°C. The pour point of the electrical insulating oil composition of the present invention is -50°C or lower, preferably -60°C or lower.

The crystal precipitation temperature of the electrical insulating oil composition of the present invention is -40°C or lower, preferably -50°C or lower. The crystallization precipitation temperature level was determined by keeping a sample at a predetermined temperature and then visually observing whether or not the sample precipitated as crystals within a predetermined period of time.

The test method for measuring the crystallization temperature level and the test results of whether or not the sample precipitated as crystals at -40°C and -50°C after 1030 hours are described and shown in Examples below.

If the crystal precipitation temperature of an electrical insulating oil composition is higher than -40°C, the composition would be degraded in insulation properties in a low temperature range.

Since benzyltoluene is produced by reacting benzyl chloride with toluene as described above, a considerable amount of chlorine is contained in benzyltoluene. Chlorine degrades the properties of an insulating oil and is preferably contained as little as possible. The chlorine content of the electrical insulating oil is preferably less than 50 mass ppm, more preferably 10 mass ppm or less, more preferably 5 mass ppm or less.

The electrical insulating oil is enhanced in dielectric dissipation factor due to the presence of water or polar substances, but would be poor in insulation properties if the dielectric dissipation factor is enhanced and thus degraded in properties of an electrical insulating oil. In order to avoid the degradation of the properties, removal of water and polar substance by contacting the oil with an activated earth can lower the dielectric dissipation factor and thus improve the properties. No particular limitation is imposed on the activated earth. Although no particular limitation is imposed on the shape of the activated earth, it is preferably a molded shape from the practical viewpoint. Since chlorines cannot be always removed with an activated earth, an epoxy compound is added as a trapping agent of hydrogen chloride. As the epoxy compound is removed to some extent by being contacted with an activated earth, it is desirously added after the electrical insulating oil is treated with an activated earth.

Examples of the epoxy compound include alicyclic epoxy compounds such as 3,4-epoxycyclohexylmethyl-3,4-epoxycyclohexane carboxylate, vinylcyclohexene diepoxide and 3,4-epoxy-6-methylcyclohexylmethyl(3,4-epoxy-6-methylhexane)carboxylate and bisphenol-A diglycidyl ether type epoxy compounds such as phenol novolac type epoxy compounds and ortho-cresol novolac epoxy compounds. The epoxy compound is added in an amount of 0.01 to 1.0 percent by mass, preferably 0.3 to 0.8 percent by mass on the basis of the total mass of the electric insulating composition.

The electrical insulating oil composition of the present invention is useful as an impregnation oil of oil-impregnated electric devices, in particular as a capacitor oil. In more particular, the composition is suitable for impregnating an oil-impregnated electric devices containing a plastic film in at least a part of an insulating material or dielectric material, preferably oil-impregnated capacitors.

Examples of the plastic film include polyester and polyvinylidene fluoride and polyolefin films such as polypropylene and polyethylene, among which polyolefin films are suitable. A polypropylene film is particularly preferable.

An oil-impregnated capacitor suitable for the present invention is produced by winding a conductor formed of metal foil such as aluminum together with the above-described plastic film as insulating material or dielectric material and if necessary also other materials such as an insulating paper, followed by impregnation with an insulating oil by a conventional method. Alternatively, an oil-impregnated capacitor suitable for the present invention is also produced by forming a metalized plastic film by depositing a metal conductor layer of aluminum or zinc on the above-described plastic film as an insulating material or dielectric material and winding the film if necessary together with a plastic film or insulating paper, followed by impregnation with an insulating oil by a conventional method.

**Examples**

The present invention will be described in more detail with the following examples but is not limited thereto.

(Example 1)

A mixed oil was prepared to comprise 60 percent by mass of 1,1-diphenylethane, 5 percent by mass of 1-phenyl-1-(3-methylphenyl)ethane and 35 percent by mass of 1-phenyl-1-(4-methylphenyl)ethane and subjected to Experimental Examples A and B described below. The results are set forth in Table 1. The 1-phenyl-1-methylphenylethane used in this example was an isomer mixture comprising 1 percent by mass of o-isomer, 11 percent by mass of m-isomer and 88 percent by mass of p-isomer produced by following the procedures of Example 1 of Japanese Patent Application Laid-Open Publication No. 2003-119159 wherein the raw material, cumene was replaced with toluene and the reaction temperature was changed to 200°C and then by carrying out distillation.

(Example 2)

A mixed oil was prepared to comprise 60 percent by mass of 1,1-diphenylethane, 21 percent by mass of 1-phenyl-1-(3-methylphenyl)ethane and 19 percent by mass of 1-phenyl-1-(4-methylphenyl)ethane and subjected to Experimental Examples A and B described below. The results are set forth in Table 1. The 1-phenyl-1-methylphenylethane used in this example was an isomer mixture comprising 1 percent by mass of o-isomer, 52 percent by mass of m-isomer and 47 percent by mass of p-isomer produced by following the procedures of Example 1 of Japanese Patent Application Laid-Open Publication No. 2003-119159 wherein the raw material, cumene was replaced with toluene and the reaction temperature was changed to 260°C and then by carrying out distillation.

(Example 3)

A mixed oil was prepared to comprise 50 percent by mass of 1,1-diphenylethane, 1 percent by mass of 1-phenyl-1-(2-methylphenyl)ethane, 24 percent by mass of 1-phenyl-1-(3-methylphenyl)ethane and 25 percent by mass of 1-phenyl-1-(4-methylphenyl)ethane and subjected to Experimental Examples A and B described below. The results are set forth in Table 1. The 1-phenyl-1-methylphenylethane used in this example was a mixture of those used in Examples 1 and 2.

(Example 4)

A mixed oil was prepared to comprise 60 percent by mass of 1,1-diphenylethane, 4 percent by mass of 1-phenyl-1-(3-methylphenyl)ethane, 26 percent by mass of 1-phenyl-l-(4-methylphenyl)ethane and 10 percent by mass of benzyltoluene and subjected to Experimental Examples A and B described below. The results are set forth in Table 1. The 1-phenyl-1-methylphenylethane used in this example was the same as that of Example 1. The benzyltoluene used in this example was an isomer mixture comprising 4 percent by mass of o-isomer, 59 percent by mass of m-isomer and 37 percent by mass of p-isomer, produced by following the procedures of Reference Production Example of Japanese Patent Publication No. 8-8008.

(Example 5)

A mixed oil was prepared to comprise 60 percent by mass of 1,1-diphenylethane, 2 percent by mass of 1-phenyl-1-(3-methylphenyl)ethane, 18 percent by mass of 1-phenyl-l-(4-methylphenyl)ethane and 20 percent by mass of benzyltoluene and subjected to Experimental Examples A and B described below. The results are set forth in Table 1. The 1-phenyl-1-methylphenylethane and benzyltoluene used in this example were the same as those of Example 4.

(Example 6)

A mixed oil was prepared to comprise 30 percent by mass of 1,1-diphenylethane, 1 percent by mass of 1-phenyl-1-(2-methylphenyl)ethane, 31 percent by mass of 1-phenyl-1-(3-methylphenyl)ethane, 28 percent by mass of 1-phenyl-1-(4-methylphenyl)ethane and 10 percent by mass of benzyltoluene and subjected to Experimental Examples A and B described below. The results are set forth in Table 1. The 1-phenyl-1-methylphenylethane and benzyltoluene used in this example were the same as those of Example 2 and Example 4, respectively.

(Example 7)

A mixed oil was prepared to comprise 60 percent by mass of 1,1-diphenylethane, 11 percent by mass of 1-phenyl-1-(3-methylphenyl)ethane, 9 percent by mass of 1-phenyl-l-(4-methylphenyl)ethane and 20 percent by mass of benzyltoluene and subjected to Experimental Examples A and B described below. The results are set forth in Table 1. The 1-phenyl-1-methylphenylethane and benzyltoluene used in this example were the same as those of Example 2 and Example 4, respectively.

(Example 8)

A mixed oil was prepared to comprise 60 percent by mass of 1,1-diphenylethane, 16 percent by mass of 1-phenyl-1-(3-methylphenyl)ethane, 14 percent by mass of 1-phenyl-1-(4-methylphenyl)ethane and 10 percent by mass of benzyltoluene, and subjected to Experimental Examples A and B described below. The results are set forth in Table 1. The 1-phenyl-1-methylphenylethane and benzyltoluene used in this example were the same as those of Example 2 and Example 4, respectively.

(Example 9)

A mixed oil was prepared to comprise 70 percent by mass of 1,1-diphenylethane, 2 percent by mass of 1-phenyl-1-(3-methylphenyl)ethane, 18 percent by mass of 1-phenyl-l-(4-methylphenyl)ethane and 10 percent by mass of benzyltoluene, and subjected to Experimental Examples A and B described below. The results are set forth in Table 1. The 1-phenyl-1-methylphenylethane and benzyltoluene used in this example were the same as those of Example 1 and Example 4, respectively.

(Example 10)

A mixed oil was prepared to comprise 70 percent by mass of 1,1-diphenylethane, 11 percent by mass of 1-phenyl-1-(3-methylphenyl)ethane, 9 percent by mass of 1-phenyl-l-(4-methylphenyl)ethane and 10 percent by mass of benzyltoluene, and subjected to Experimental Examples A and B described below. The results are set forth in Table 1. The 1-phenyl-1-methylphenylethane and benzyltoluene used in this example were the same as those of Example 2 and Example 4, respectively.

(Example 11)

A mixed oil was prepared to comprise 70 percent by mass of 1,1-diphenylethane, 5 percent by mass of 1-phenyl-1-(3-methylphenyl)ethane, 5 percent by mass of 1-phenyl-1-(4-methylphenyl)ethane and 20 percent by mass of benzyltoluene, and subjected to Experimental Examples A and B described below. The results are set forth in Table 1. The 1-phenyl-1-methylphenylethane and benzyltoluene used in this example were the same as those of Example 2 and Example 4, respectively.

(Example 12)

A mixed oil was prepared to comprise 80 percent by mass of 1,1-diphenylethane, 1 percent by mass of 1-phenyl-1-(3-methylphenyl)ethane, 9 percent by mass of 1-phenyl-l-(4-methylphenyl)ethane and 10 percent by mass of benzyltoluene, and subjected to Experimental Examples A and B described below. The results are set forth in Table 1. The 1-phenyl-1-methylphenylethane and benzyltoluene used in this example were the same as those of Example 1 and Example 4, respectively.

(Example 13)

A mixed oil was prepared to comprise 20 percent by mass of 1,1-diphenylethane, 1 percent by mass of 1-phenyl-1-(2-methylphenyl)ethane, 9 percent by mass of 1-phenyl-1-(3-methylphenyl)ethane and 70 percent by mass of 1-phenyl-1-(4-methylphenyl)ethane, and subjected to Experimental Examples A and B described below. The results are set forth in Table 1. The 1-phenyl-1-methylphenylethane used in this example was the same as that of Example 1.

(Example 14)

A mixed oil was prepared to comprise 80 percent by mass of 1,1-diphenylethane, 2 percent by mass of 1-phenyl-1-(3-methylphenyl)ethane and 18 percent by mass of 1-phenyl-1-(4-methylphenyl)ethane, and subjected to Experimental Examples A and B described below. The results are set forth in Table 1. The 1-phenyl-1-methylphenylethane used in this example was the same as that of Example 1.

(Comparative Example 1)

Only 1-phenyl-1-xylylethane was used and then subjected to Experimental Examples A and B described below. The results are set forth in Table 1. The 1-phenyl-1-xylylethane was too high in kinematic viscosity and was not able to be measured at -50°C in Experimental Example B.

(Comparative Example 2)

A mixed oil was prepared to comprise 55 percent by mass of 1,1-diphenylethane and 45 percent by mass of 1-phenyl-1-xylylethane and then subjected to Experimental Example A described below. The results are set forth in Table 1.

(Comparative Example 3)

Only 1,1-diphenylethane was used and then subjected to Experimental Example A described below. The results are set forth in Table 1.

(Comparative Example 4)

A mixed oil was prepared to comprise 60 percent by mass of 1,1-diphenylethane, 2 percent by mass of 1-phenyl-1-(3-methylphenyl)ethane, 18 percent by mass of 1-phenyl-l-(4-methylphenyl)ethane and 20 percent by mass of diphenylmethane and then subjected to Experimental Example A described below. The results are set forth in Table 1. The 1-phenyl-1-methylphenylethane and benzyltoluene used in this example were the same as those of Example 4. The diphenylmethane used in this example was a reagent manufactured by Tokyo Chemical Industry Co., Ltd. (purity 99 percent by weight or more).

[Experiment A] (Crystallization experiment at -40°C, -50°C)

Concerning the relationship of temperature and crystallization, an insulating oil composition does not desirously precipitate as crystals until the lowest acceptable temperature of -50°C reached in order to maintain the properties of a capacitor. In order to confirm the crystal precipitation of the insulating oil compositions, the oils of Examples 1 to 14 and Comparative Examples 1 to 4 were each put into a 100 ml sample bottle, left in a low temperature thermostatic bath, the temperature of which was then kept for 1030 hours and thereafter whether crystals precipitated or not was visually observed. The results are set forth in Table 1. "Good" denotes a state where the oil exhibited transparency and no crystal precipitation was observed in the oil, "Not Bad" denotes a state where the oil exhibited no transparency and was fluidized although it partially precipitated as crystals, and "Bad" denotes a state where the oil precipitated as crystals and solidified as the whole. The oils evaluated as "Not Bad" were subjected to the same crystallization experiment with the same procedures at -40°C. The insulating oil compositions of the present invention did not solidify even at -50°C or lower and thus can maintain the properties of a capacitor until the lowest acceptable temperature reaches. Even though an oil did not solidify at -50°C but if it has a crystallization experiment result evaluated as "Not Bad", the experiment result at -40°C is preferably "Good".

[Experiment B] (Evaluation of electrical insulating oil composition using a model capacitor)

The capacitor used in this experiment was as follows. The solid insulating material used herein was a simultaneously biaxially stretched polypropylene film of easy-impregnation type that was manufactured by Shin-Etsu Film Co., Ltd. through a tubular method. Two sheets of this polypropylene film of a 12.7 $\mu$m thickness (weight method) were wound together with two sheets of aluminum foil electrode to produce a capacitor device of 0.2 to 0.3 $\mu$F in electrostatic capacity, which was then put in an tin can. The can was made flexible so as to compensate sufficiently the shrinkage of an insulating oil at low temperatures. The end portions of the electrode was slit but was kept unfolded.

A method for connecting between the electrode and the terminal is generally used, in which a ribbon-shaped lead foil is inserted into the device. However, if an oil precipitates as crystals, this method undergoes a loose connection between the lead foil and the electrode surface and as the result causes partial discharge from the electrode, possibly resulting in a failure to the measurement. Therefore, in the present experiment, similarly to a method used for a high frequency capacitor, the ends of the electrodes protruding beyond the respective edges of the polypropylene films were crimped and then one of the ends was spot-welded to lead wires.

The can-type capacitor thus prepared was subjected to vacuum drying in a conventional manner, and under the same vacuum condition, it was impregnated with an insulating oil, followed by sealing. The capacitor was then subjected to heat treatment at a maximum temperature of 80°C for two days and nights in order to maintain the impregnation uniformly and stably. After leaving it to stand at room temperature for 5 days or longer, the capacitor was applied with AC 1270 V (corresponding to 50 V/$\mu$m) in a thermostatic bath kept at 30°C for 16 hours and then was used for an experiment.

Two sheets of polypropylene film of 12.7 $\mu$m thick were laminated to be used as a dielectric material, and wound and laminated together with an electrode of aluminum foil in accordance with a conventional manner thereby producing a model capacitor for oil-impregnation.

This capacitor was impregnated with each mixed oil under vacuum to produce an oil-impregnated capacitor with a capacitance of 0.26 $\mu$F. Before impregnation, each of the electrical insulating oil compositions was pre-treated with an activated earth. That is, an activated earth galeonite #036, manufactured by MIZUSAWA INDUSTRIAL CHEMICALS,LTD. was added in an amount of 10 percent by mass to each of the electrical insulating oil compositions and stirred at a liquid temperature of 25°C for 30 minutes and then filtered. After filtration, 0.65 percent by mass of a chlorine trapping agent that is an epoxy compound (alicyclic epoxide; product name: CELLOXIDE 2021P manufactured by Daicel Corporation) was added and used for impregnation.

Thereafter, the oil-impregnated capacitors were applied with an alternating voltage at a predetermined temperature by a predetermined method to obtain the breakdown voltage from the voltage and time at which the capacitor had insulation breakdown in accordance with the following formula 1. The predetermined method for applying voltage is a method wherein an applied voltage is continuously raised from a potential gradient of 50 v/μm at a rate of 10 v/μm every 24 hours.

$$\text{Breakdown voltage (v/μm)} = V + S \times (T/1440) :$$

formula 1

wherein V: applied voltage (v/μm) at insulation breakdown
S: raised voltage (v/μm) every 24 hours
T: time period till insulation breakdown occurs after raising applied voltage (minute)

[Table 1]

| | Electrical Insulating Oil Composition | | | | | | | | | Experimental Example A (Crystallization experiment) | | Experimental Example B(Breakdown voltage, v/$\mu$m) | | | 40°C Kinematic viscosity |
| --- | --- | --- | --- | --- | --- | --- | --- | --- | --- | --- | --- | --- | --- | --- | --- |
| | 1,1-DPE (C14) | PTE total (C15) | o-PTE (C15) | m-PTE (C15) | p-PTE (C15) | BT (C14) | PXE (C16) | DPM (C13) | 1,1-DPE/PTE | -50°C | -40°C | -50°C | -30°C | 30°C | mm²/s |
| Example 1 | 60 | 40 | 0 | 5 | 35 | 0 | 0 | 0 | 1.5 | Good | - | 95 | 116 | 140 | 2.9 |
| Example 8 | 60 | 30 | 0 | 16 | 14 | 10 | 0 | 0 | 2.0 | Good | - | 97 | 115 | 149 | 2.8 |
| Example 9 | 70 | 20 | 0 | 2 | 18 | 10 | 0 | 0 | 3.5 | Good | - | 97 | 115 | 142 | 2.8 |
| Example 10 | 70 | 20 | 0 | 11 | 9 | 10 | 0 | 0 | 3.5 | Good | - | 97 | 114 | 143 | 2.8 |
| Example 11 | 70 | 10 | 0 | 5 | 5 | 20 | 0 | 0 | 7.0 | Good | - | 98 | 115 | 145 | 2.8 |
| Example 12 | 80 | 10 | 0 | 1 | 9 | 10 | 0 | 0 | 8.0 | Good | - | 98 | 114 | 140 | 2.8 |
| Example 13 | 20 | 80 | 1 | 9 | 70 | 0 | 0 | 0 | 0.3 | Not Bad | Good | - | - | - | 3.1 |
| Example 14 | 80 | 20 | 0 | 2 | 18 | 0 | 0 | 0 | 4.0 | Not Bad | Good | - | - | - | 2.9 |
| Comparative Example 1 | 0 | 0 | 0 | 0 | 0 | 0 | 100 | 0 | - | Bad | - | - | 89 | 121 | 5.0 |
| Comparative Example 2 | 55 | 0 | 0 | 0 | 0 | 0 | 45 | 0 | - | Bad | - | 89 | 99 | 133 | 3.9 |
| Comparative Example 3 | 100 | 0 | 0 | 0 | 0 | 0 | 0 | 0 | - | Bad | - | - | - | - | 2.8 |
| Comparative Example 4 | 60 | 20 | 0 | 2 | 18 | 0 | 0 | 20 | 3.0 | Bad | - | - | - | - | 2.6 |

In Table 1, 1,1-DPE denotes 1,1-diphenylethane, o-PTE denotes 1-phenyl-1-(2-methylphenyl)ethane, m-PTE denotes 1-phenyl-1-(3-methylphenyl)ethane, p-PTE denotes 1-phenyl-1-(4-methylphenyl)ethane, BT denotes benzyltoluene, PXE denotes 1-phenyl-1-xylylethane, and DPM denotes diphenylmethane.

In the crystallization experiment, it was confirmed that the compositions of Examples 1 to 14 did not solidify even though they were kept at -50°C for a long period of time. Whereas, the compositions of Comparative Examples 1 to 4 solidified when kept at -50°C for a long period of time and thus were inferior in properties to the compositions of Examples 1 to 14.

In the evaluation using the model capacitor, the compositions of Examples 1 to 14 exhibited breakdown voltages of 91 V/$\mu$m or higher at -50 °C, 110 V/$\mu$m or higher at -30°C and 140 V/$\mu$m or higher at 30°C and thus was confirmed that they exhibited sufficient electric insulation properties. Whereas, the value at -30°C of the composition of Comparative Example 3 and those at -50°C and -30°C of the composition of Comparative Example 2 were lower than those of Examples 1 to 14 and thus poorer in insulation breakdown properties.

From the foregoing, the composition of the present invention can be deemed an electrical insulating oil composition exhibiting superior properties in a wide temperature range of -50 to 30°C.

**Industrial Applicability**

The electrical insulating oil composition of the present invention is excellent in properties in a wide temperature range of -50°C to 30°C. Furthermore, since each component of the composition gives no adverse effect on living bodies, the composition of the present invention is extremely excellent for practical use as an electrical insulating oil composition.

**Claims**

1. An electrical insulating oil composition comprising diarylalkanes having 14 carbon atoms (C14) and having 15 carbon atoms (C15), wherein the C14 diarylalkane is 1, 1-diphenylethane or a mixture of 1,1-diphenylethane and benzyltoluene and the C15 diarylalkane is 1-phenyl-1-methylphenylethane.

2. The electrical insulating oil composition according to claim 1 wherein the 1,1-diphenylethane/1-phenyl-1-methylphenylethane (mass ratio) is from 0.5 to 8.0.

3. The electrical insulating oil composition according to claim 1 or 2, wherein the total content of 1-phenyl-1-(3-methylphenyl)ethane and 1-phenyl-1-(2-methylphenyl)ethane of the 1-phenyl-1-methylphenylethane is 25 percent by mass or less on the basis of the electrical insulating oil composition.

4. An electrical insulating oil composition produced by contacting an activated earth with the electrical insulating oil composition according to any one of claims 1 to 3 and adding thereto 0.01 to 1.0 percent by mass of an epoxy compound.

## INTERNATIONAL SEARCH REPORT

| International application No. |
|---|
| PCT/JP2013/052364 |

A. CLASSIFICATION OF SUBJECT MATTER
*H01B3/22*(2006.01)i, *H01G4/22*(2006.01)n

According to International Patent Classification (IPC) or to both national classification and IPC

B. FIELDS SEARCHED

Minimum documentation searched (classification system followed by classification symbols)
H01B3/22, H01G4/22

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 1-228924 A  (Nippon Petrochemicals Co., Ltd.),<br>12 September 1989 (12.09.1989),<br>claims; page 5, lower left column to lower right column; table 1<br>(Family: none) | 1,2<br>1-4 |
| Y | CN 102290123 A  (Changzhou Wujin Dongfang Insulating Oil Co., Ltd.),<br>21 November 2011 (21.11.2011),<br>claims; paragraphs [0009], [0013]; examples<br>(Family: none) | 1-4 |

| [X] Further documents are listed in the continuation of Box C. | [ ] See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>07 March, 2013 (07.03.13) | Date of mailing of the international search report<br>19 March, 2013 (19.03.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/052364

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 4-61486 B2 (Nippon Petrochemicals Co., Ltd.), 01 October 1992 (01.10.1992), claims; columns 3 to 4; examples & US 4716084 A          & EP 199551 A2 | 3,4 |
| Y | JP 59-217901 A (Nissin Electric Co., Ltd.), 08 December 1984 (08.12.1984), claims; examples (Family: none) | 4 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60087231 A
- JP 61241907 A
- JP 63064217 A
- JP 57050708 A
- JP 2003119159 A
- JP 8008008 A